# EUROPEAN PATENT APPLICATION

(11) **EP 1 066 760 A2**
(43) Date of publication of application: **10.01.2001**
(21) Application number: 00305735.3
(22) Date of filing: 07.07.2000
(51) Int. Cl.: A23L 1/18, A23P 1/10

(54) **Puffed cereal cake and device for manufacturing it**

(30) Priority: 09.07.1999 JP 19594199
(71) Applicant: Enseki Aojiru Co., Ltd., Onsengun, Ehime-Prefecture (JP)
(72) Inventor: Takaoka, Terumi, Onsengun, Ehime-Prefecture (JP)
(74) Representative: Johnstone, Douglas Ian

(57) **Abstract**

Germinating cereal (A) in a hopper (9) is dispensed by a slider (14) reciprocated by a pinion (13) and rack (12) and dispensed into cavities defined by a downwardly displaced inner part (19) of a lower mould assembly (11) also including an outer part (18). The slider is retracted for recharging cavities (14a) therein with further cereal (A) and to permit downwardly protruding parts (10a) of an upper mould part (10) to be lowered towards the lower mould assembly thus pressing the cereal therein. Mould parts are displaced by upper and lower mould cylinders (26, 27) and heated by heaters (17, 22). As the further cereal is delivered to the mould parts (10, 11) a pushing part (15) of the slider (14) displaces formed cereal cakes down a chute (28) into a cake receiving region of the device. The device is mounted on wheels and suitable for use in department stores, outdoor venues etc.

## Description

This invention relates to cereal cakes using germinating unhulled rice and other germinating grains as the main constituent material and a device and process for manufacturing them.

Some conventional cereal cakes are made in circular form approximately 5 to 10 mm thick. Each cake is heat processed and pressed by upper and lower mould parts after cereal, originally from unhulled rice, white rice, barn millets and other millets has been put into a forming position of a rice cake manufacturing machine.

Since a conventional cereal cake is made using raw grain without any processing, it bars digestion of protein and the absorption of minerals by phytic acid, a type of acid contained in cereals, and its nutrition is excreted without getting absorbed into the body even when eaten as it is.

Conventional manufacturing devices for cereal cakes are generally large and designed to be installed in a factory. Their constituent elements are separate so it is not easily possible to use them in vending shows which demonstrate the steps involved in making a finished cereal cake product from raw materials. There are no devices which are as convenient as the device according to the present invention, with which it is possible to wrap and sell a cake, immediately after it has been made. Such devices are useful at festivals and like events and at parks such as theme parks. In the cereal cake according to the invention, germinating grains are heated and pressed to form a predetermined shape in such a way that germination of the cereals provides phosphorous and by the effect of phosphoric acid enzyme, phytic acid gets dissolved into phosphoric acid and inositol whereas protein present turns into amino acid, fat present turns into an essential fatty acid, starch turns into sugar and minerals present get combined with amino acid, becoming easier to absorb. The cereal cake provided is characterised by a distinctive natural sweetness typical of the cereal itself.

Another object of this invention is to provide a cereal cake which feels good on the tongue and is easy for infants and aged people to eat. The cake is made by forming a cereal cake of predetermined form after geminating cereals have been irradiated by far infra-red radiation, heated and pressed. The product is characterised in that it is easy to be sufficiently absorbed into the body as a consequence of making the best of the nutrition typical of the cereals by the use of far infra-red radiation.

A still further preferable object is to provide a cereal cake including at least one additional food like black soya beans, black sesames and Hijiki (a kind of edible marine product) mixed with the above-mentioned germinating grains and producing nutritional elements from those additional foods.

According to a further aspect of the invention there is provided a manufacturing device for the cereal cakes. With the device, it is possible for all processing of the materials through to the finished product to be accommodated in one system mounted on a moving platform with wheels. Processing apparatus which processes the grains into cakes and a receipt part which receives the processed cakes are installed together. Consequently, the device is very effective in promoting the sale of the cakes. Manufacturing of products according to the invention is convenient not only inside building like department stores but also at various other venues such as in event halls.

In the processing apparatus, cereals are dispensed from a hopper by a dispensing device and heat-pressed between upper and lower moulds so that it is possible to process the cereal by expansion and frying. Furthermore, since operation of the device involves elevating and bringing down the upper and lower moulds, its construction is simple and suitable for use as a moving device.

Furthermore, another preferred object of this invention is to form more than one operating space surrounded by transparent plates or panels so that it is possible to limit contact with outside agents. As the processing apparatus and the cake recipient region are situated inside the operating spaces, the device is hygienic. Furthermore, viewers watching the cakes being made and those who want to buy the cakes can easily enjoy watching how the cakes are being made from the outside of the device.

A preferred feature of this invention is to provide a wrapping space in the recipient region of the device or in the processing region so that it is possible not only to exhibit the way the cakes are manufactured but also make use of one device for selling the cakes immediately after they have been baked and wrapped.

According to a further preferred feature of the present invention it is possible to make the environment of the recipient region appropriate for cakes. Material constituting the bottom of the recipient region of the device is formed of a material of high heat conductivity. By putting an air compressor for driving an air cylinder for driving the moulds of the heat-pressing means underneath this bottom, it is not necessary to supply additional heating means. Accordingly it is possible to make use of the high heat generated by the compression of air in the compressor.

The invention will now be described by way of example with reference to the accompanying Figures in which:
Figure 1 is a perspective view of a cereal cake of the present invention;
Figure 2 is a perspective view of a manufacturing device according to the invention for manufacturing a cereal cake;
Figure 3 is a vertical section of the manufacturing device shown in Figure 2;
Figure 4 is a transverse cross-section of the manufacturing device shown in Figure 2;
Figure 5 is a vertical cross-section of the processing part of the device shown in Figure 2;
Figures 6 to 9 are views similar to Figure 5 showing different stages in the operation of the device.

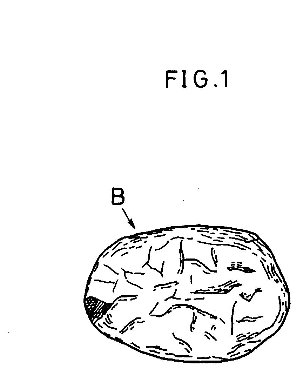

The Figures show a cereal cake and a device for manufacturing it. Figure 1 shows the finished grain cake B of thin meat made by the present manufacturing device which has an uneven surface, it is approximately 1 to 2 mm thick and has a diameter of 3 to 6 cm. Depending on the size of the upper and lower pressing moulds and the pressure applied thereto, different thickness and grain cake diameters can be achieved.

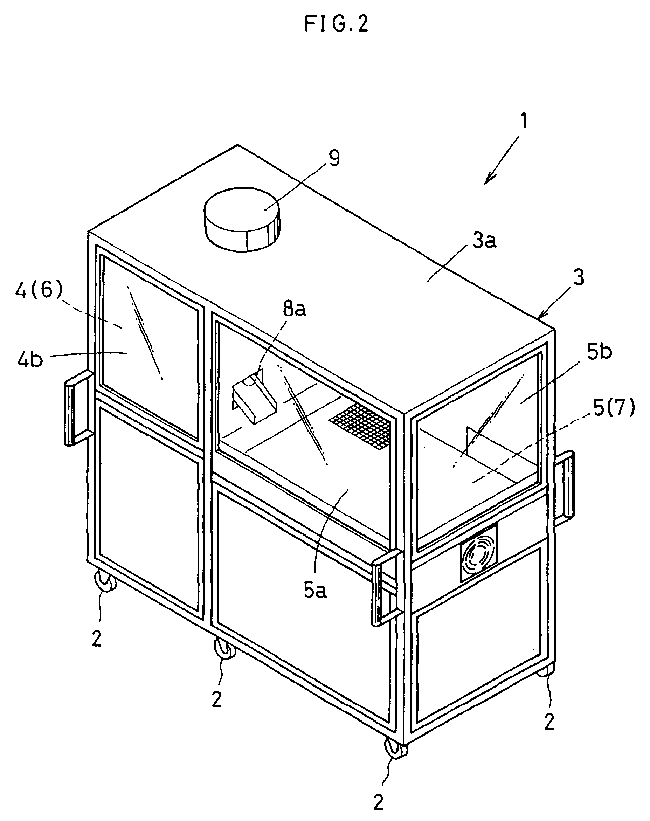

Figure 2 is a perspective view of the manufacturing device 1 (which will be called the device from hereon) for making the grain cake B. The device comprises a movable platform which can be used anywhere. The device 1 is one on/in which necessary sub-devices are installed inside a rectangular parallelpiped case body 3 which has wheels 2 (e.g. castors) thereunder.

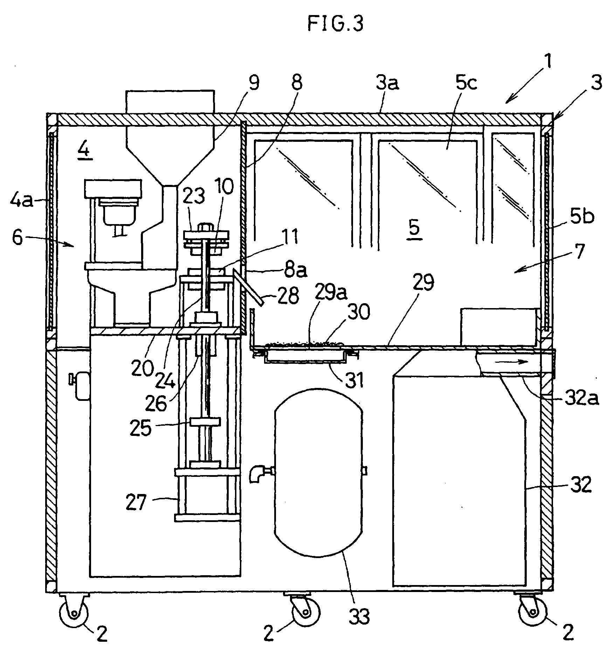

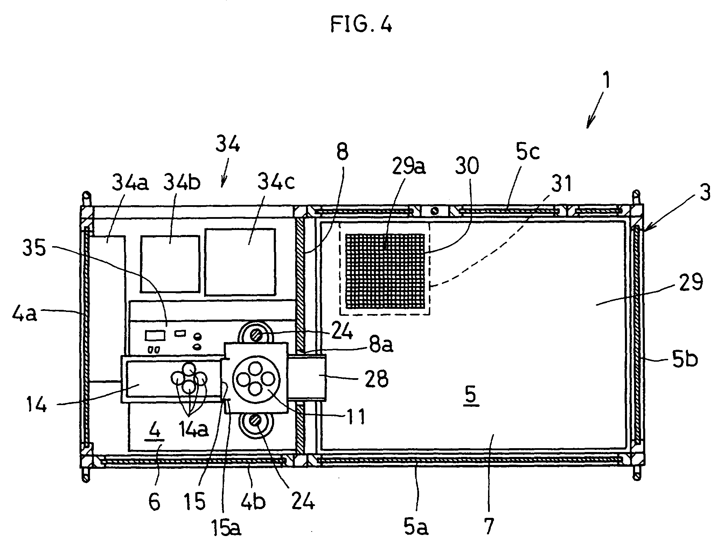

Figure 3 is a vertical section of the device 1 and Figure 4 is a transverse cross-section of the upper part of the device 1. As is clear from these Figures, the device 1 is provided with two adjacent surrounded or enclosed spaces 4 and 5 in an upper part thereof. One space 4 is equipped with processing apparatus 6 which manufactures cakes by processing cereal and the space 5 comprises a recipient region for receiving the cakes B which have just been made. The lower part of the device is provided with a machine which is necessary for driving the processing apparatus or mechanical part 6.

The device 1 has a ceiling 3a covering the operating spaces 4 and 5. The operating space 4 is cut off from the outside on two adjacent side surfaces which are provided with transparent plates 4a and 4b (e.g. acrylic plates). Furthermore, the operating space 5, called the cake recipient region 7, is surrounded by transparent plates 5a and 5b, but on the same side as an opening side of the operating space 4 an openable and closable door 5c is provided. A division between the operating space and the cake recipient region 7 is provided by a transparent plate 8 which is provided with a communicating hole 8a which connects the spaces 4 and 5 with each other in a predetermined position and a cake B which has been produced by the processing apparatus 6 is received through this communicating hole 8a into the cake receiving region 7.

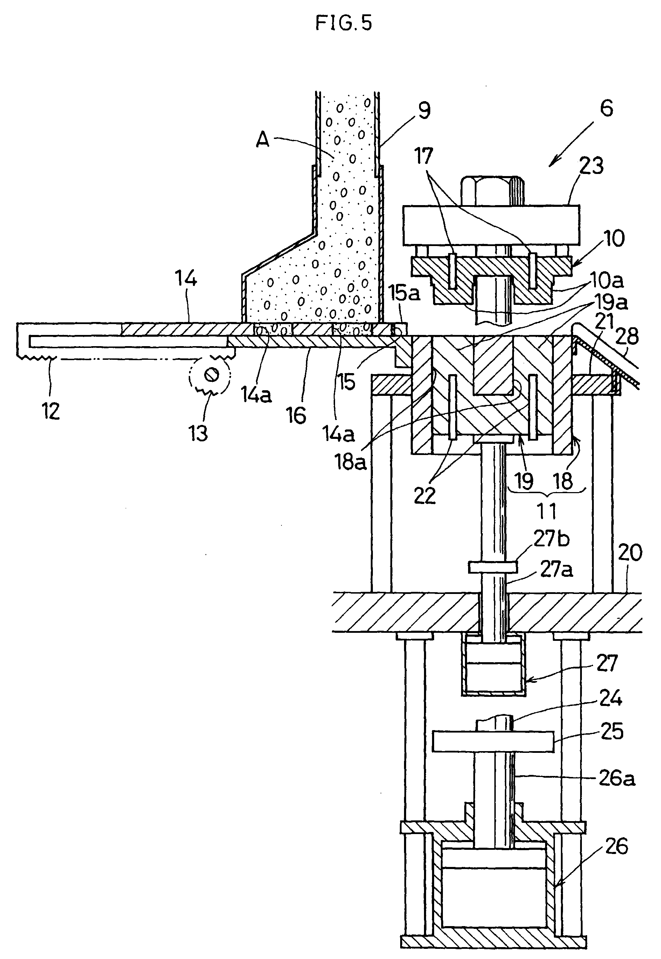

The processing apparatus 6, as shown in Figure 5, comprises: a hopper 9 which contains cereal A; a means of dispensing a determined quantity of the grain A from the hopper 9; a means of heat-pressing the cereal A which has been so dispensed by means of an upper mould 10 and a lower mould 11; and a means of pushing cereal cakes B which have been made by the above means of heat-pressing into the cake recipient region 7.

The hopper 9 facilitates charging of the device with cereal A by protruding a little upwardly from the upper surface of the ceiling 3a of the case body 3. The lower part of the hopper 9 constitutes a narrow funnel-like passage. A rack 12 connected to a slider 14 and moved by a pinion 13 is situated below the hopper 9.

The slider 14 serves as a means of dispensing the cereal A as well as means of displacing grain cakes B which have been made. In other words, while a motor (not shown in the drawings) drives the slider 14 forwardly, cereal A is dispensed from the hopper and at the same time cakes already made are pushed out from the processing apparatus into the cake recipient region 7.

The slider is provided with four round vertical through feeding holes 14a (see Figures 4 and 5). At one end, the slider 14 is provided with limitative guide protrusions 15a which prevent cakes being pushed towards the recipient region 7 from falling off the sides and a part 15 for pushing the cakes towards the recipient region 7. On the underside of the slider 14, below the hopper 9, there is provided a guiding plate 16 which prevents grain A, which has entered the feeding holes 14a, from falling through the slider.

The four feeding holes 14a are configured so as to correspond with a processing surface of the upper mould 10 and the lower mould 11 for heat-pressing the cereal A. The amount of grain A to be provided is determined by the thickness of the slider 14 and the size of the feeding holes 14a.

According to the embodiment shown, four cakes are made at one time by heat-pressing. However the number of cakes made may be 1, 5, 6 or any convenient number.

The upper mould 10 is provided with a heater 17 which is maintained at a determined temperature. Four cylindrical parts 10a protrude vertically downwardly from a lower surface of the upper mould 10.

The lower mould 11 is provided with an inner part 19 and an outer part 18 having four upwardly open round holes 18a. The inner part 19 moves up and down inside the holes 18a in the outer part. The outer part 18 is fixed inside a supporting plate 21 positioned at a given height on a base 20. The above-mentioned guiding plate 16 and the upper surface of the outer part 18 are set at the same level and co-planar. The inner part 19 is provided with heaters 22 and has four cylindrical parts 19a protruding upwardly therefrom.

The upper mould 10 and the inner part 19 of the lower mould 11 are moved up and down by air cylinders.

The upper mould 10 is connected to the lower side of an upper support plate 23 which is supported by right hand and left hand guide rods 24 which extend below the base 20 where they connect to a lower support plate 25 in a lower region of the operating space 4. The lower support plate 25 is fixed to the end of a piston rod 26a of an upper mould air cylinder 26, actuation of which causes the upper mould 10 to move up and down.

The inner part 19 of the lower mould 11 is fixed to the end of a piston rod 27a of a lower mould air cylinder 27 situated vertically under the base 20 in such a way as to move it up and down. A stopper 27b is fixed on the piston rod 27a.

Fixed diagonally between the supporting plate 21 and the outer part 18 of the lower mould 11, and fixed on the supporting plate 21 is a slide-like plate or chute 28 down which formed cakes can slide. Consequently, the cereal cakes pass through the communicating hole 8a of the transparent plate 8 between the spaces 4 and 5 and slide down the plate 28 into the cake recipient region.

The cake recipient region 7 has a base part 29 which is made of a material of good heat conductivity such as steel and there is formed therein a hole 29a through which small debris and powder from the cakes B can fall. On the top of the hole 29 there is fixed a net or grille 30 and a removable powder collector 31 is installed below it.

Under the base part 29, an air compressor 32 is situated which is designed to drive the upper and lower mould air cylinders 26 and 27. An exhaust duct 32a is situated above the compressor so as to touch or be adjacent to the base part 29. Therefore, the base part 29 will receive heat from the air compressor 22 by means of gas exhausted therefrom which has been heated as a consequence of compression. Accordingly, the environment of the inner part of the cake recipient region 7 will be dried, thus providing an excellent environment for the prepared cakes without having to provide an additional drying or heating device specifically for this purpose. Figure 3 shows a receiver tank 33.

As shown in Figure 4, in the operating space 4, having the above mentioned processing apparatus 6, there is a wrapping space 34 for wrapping cakes B obtained from the cake recipient region 7 at a marginal region on the open side of space 4. More specifically, on the open side of the operating space 4, a wrapper container 34a for accommodating wrappers or bags, a balance 34b and a sealing machine 34c to seal the wrappers or bags are provided. An operating panel 35, for operating the device 1 is also shown.

The wrapping space 34 as described may be provided in the cake recipient region 7 or provided in another operating space of the device.

The device 1 functions as follows during the manufacture of cereal cakes.

The making of a thin rice cake B which gives a crispy feeling to the teeth and which is made using millet or germinating millet selected from various cereals will be described as an example. The nutritional components of germinating millet are easily absorbed into the body because of the germination process. If irradiated by far infra-red rays, nutrition from millet is absorbed best since this process makes it easier to absorb its nutrition into the body.

As a first step in the manufacturing process millet, as the grain A, is placed in the hopper 9. Other marine and/or mountain products like beans (e.g. soya beans), other cereals, sesame products (e.g. sesame seeds), Hijiki (a kind of edible marine product) or small fishes may be mixed with the millet. In this way, as shown in Figure 5, the cereal A will be fed into the feeding holes 14a of the slider 14.

A water content of approximately 14-15% should be maintained in the millet. In the upper mould and the lower mould, electricity is supplied to the heaters 17 and 22 to maintain a specific temperature. In the case of millet only, this temperature might be about 240°C.

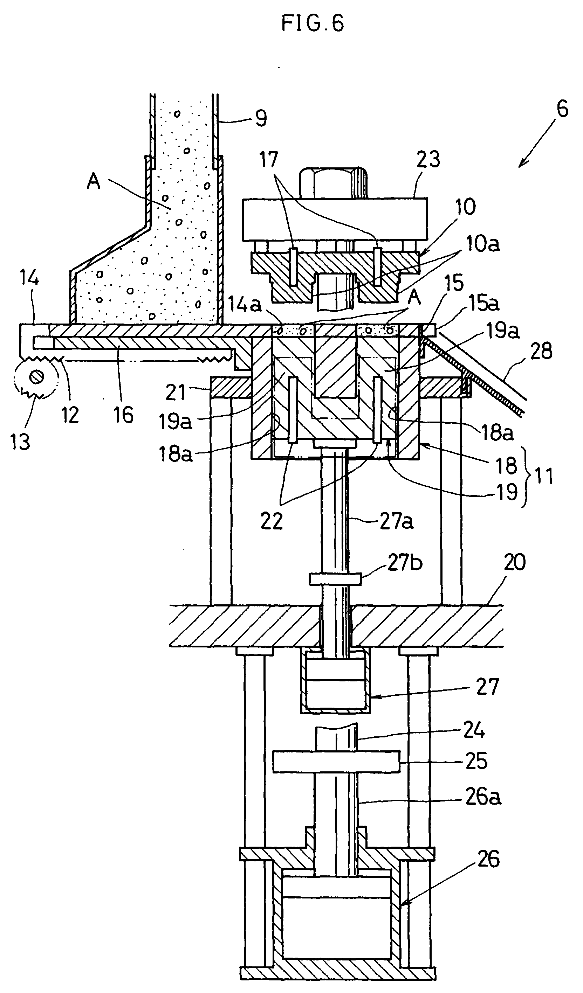

The pinion 13 is rotated by the motor and other devices (not shown in the Figures) sending the rack forwards. The slider 14 is accordingly moved towards the lower mould 11 until each feeding hole of the slider 14 is positioned above one of the cylindrical parts 19a of the lower mould 11. Subsequently, the inner part 19 of the lower mould 11, as shown in Figure 6 with a dashed line is brought down by the lower mould air cylinder 27. This lowering movement stroke continues until the stopper 27b touches the base 20. Furthermore, the slider 14 is returned by rotation of the motor, pinion 13 and other devices, allowing refilling of the feeding holes 14a with cereal A to occur and positioning the slider 4 for pushing the formed cereal cakes forward.

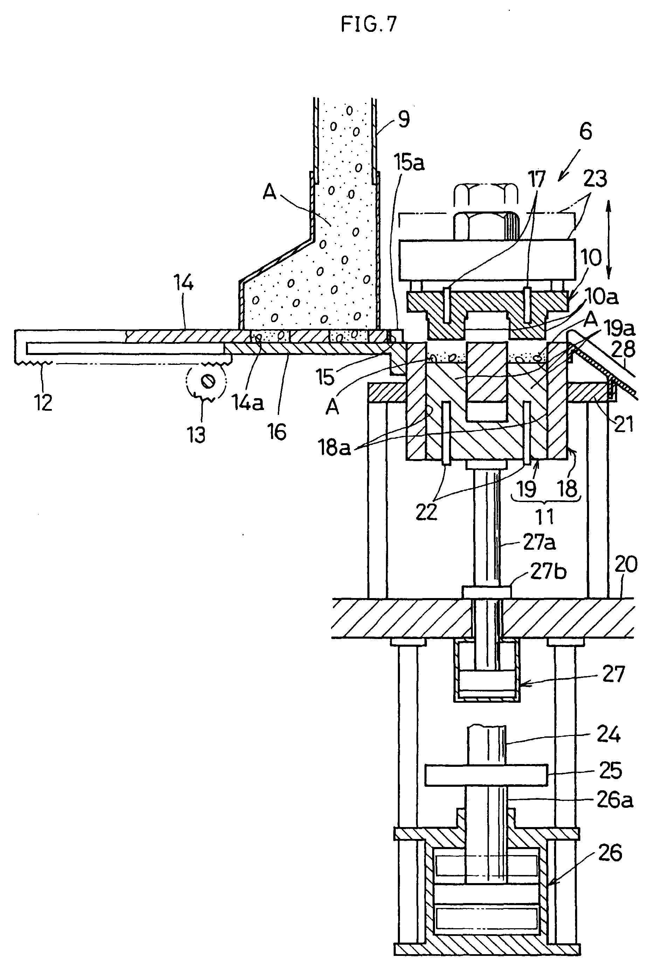

The upper mould 10 is then brought down as shown in Figure 7, for heat-pressing of the cereal cakes. In other words, as the upper mould air cylinder 6 is driven to bring the upper mould 10 down, the protruding parts 10a of the upper mould 10 heat-press the cereal inside the cavities defined by the outer part 18 and the inner part 19 of the lower mould 11.

In the manufacture of a cake B of a crispy thin material, such as a rice cake, as described above, at a temperature of approximately 240°C, a pressure of approximately 6 kg/cm² is applied for about 2 minutes. After a certain period of time has passed, the upper mould 10 is brought up at a high speed by the upper mould air cylinder 26. As result of this procedure, the cereal A swells and looses its water.

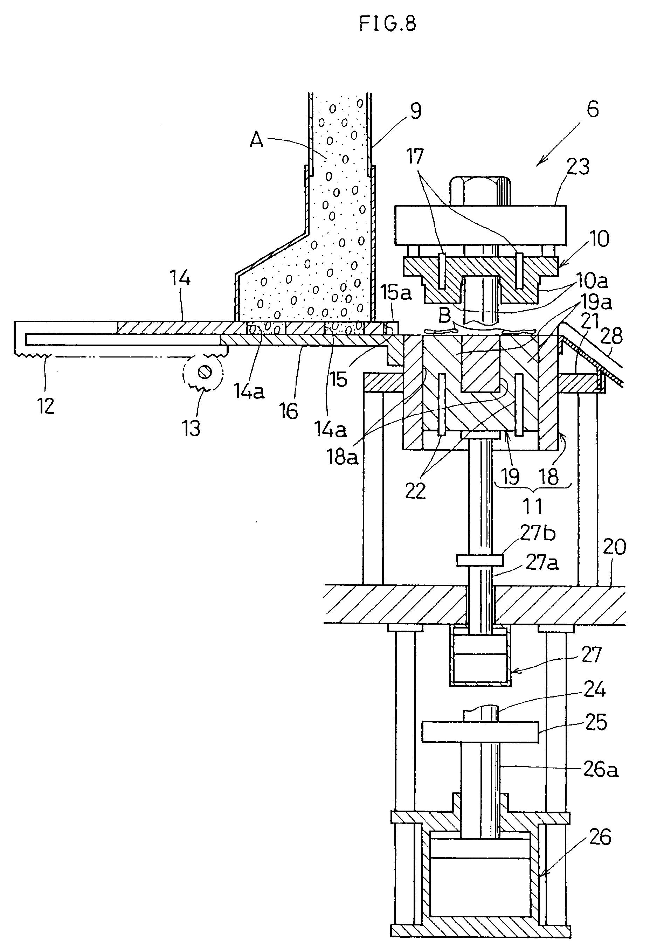

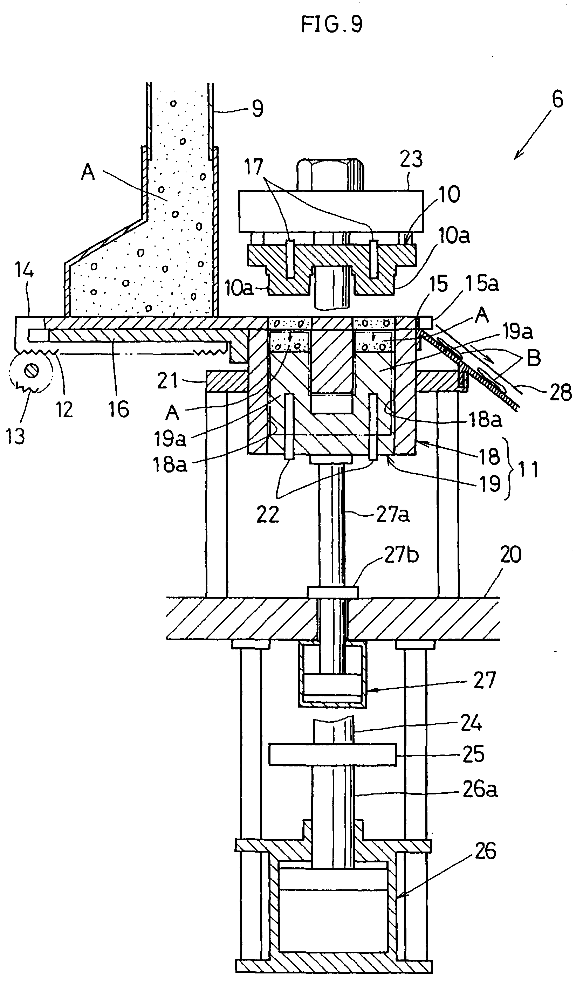

After this, the upper mould air cylinder 26 is driven to bring the upper mould 10 down to heat press the grain A which will have swollen. This heat pressure may last for about two minutes at about 240°C and with a pressure of about 6 kg/cm². By this reapplication of heat pressure, the cereal A, which has been swollen gets an uneven surface as a whole after being fried and becomes crispy and delicious in a stereoscopic or three-dimensional form. Then, as the upper mould 10 is raised, the inner part 19 of the lower mould 11 is also raised. Consequently, the cakes formed move to the position as shown in Figure 8 and become level with the guiding plate 16 supporting the slider 14. At this point, as at the beginning of the process, the slider 14 is advanced and the cakes B, as shown in Figure 9, are pushed out into the cake recipient region 7 down the shute 28. At the same time, further cereal A, which has refilled the feeding holes 14A of the slider 14, is moved to a position above the inner part 19 of the lower mould 11. After this, when the inner part 19 of the lower mould 11 is lowered, as is shown by the broken line in Figure 9, the further cereal A falls into the cavities defined by the outer part 18 and the inner part 19 of the lower mould 11. Consequently, each time the slider 14 is moved back to the position shown in Figure 5, cereal A for the next batch of cakes is charged into the feeding holes 14a. The cakes B which have been made and delivered to the cake recipient region 7 are kept dry by heat from the air compressor 32 and retain their crispy texture. Furthermore, as no other special devices are required to achieve this, the construction of the device is simple and compact.

Accumulated superfluous debris or powder drops through the hole 29a of the base part 29. After opening the door 5c, and extracting the prepared cakes, the wrapping space 34 is utilised for wrapping the cakes.

As the processing apparatus 6 which processes the cereal A into the cakes B and the recipient region 7 which receives the processed cakes B are installed together within the case body 3 with wheels 2, all processing from the raw material through to the finished product can be achieved within one device. Therefore, in places like department stores as well as at indoor and outdoor events such devices are very useful for exhibiting and sale purposes. Furthermore, as the device constitutes a moving base with wheels, it is easy to move.

In the processing apparatus 6, the cereal A which is provided from the hopper 9, is heat-pressed by the upper mould 10 and the lower mould 11 so that a swelling process as well as a frying process is possible. In the above example, there is described a process of heat-pressing twice. However, in a process of single heat-pressing, in which the upper mould 10 is elevated at a high speed, it is possible to obtain a grain cake B which is soft and swollen as a result of the swelling process.

As it is merely necessary to elevate and bring down the upper and lower moulds 10 and 11, the structure can be simple and suitable for incorporation into the moving device.

As a consequence of the transparent plates 4a, 4b, 5a, 5b and the doors which surround the two operating spaces 4 and 5, where the processing apparatus 6 and the cake recipient region 7 are respectively situated, it is possible to maintain hygienic conditions as it is possible to limit contact with outside agents. This makes it possible for people who want to buy the product or mere onlookers to enjoy watching the exhibition provided by the cakes being produced since they can see this from the outside of the device.

As a wrapping space 34 for wrapping the product is provided, it is possible to wrap and sell the cakes immediately after they have been made in addition to exhibiting the process of making the product.

In the above example the case body 3 corresponds to the moving base.

## Claims

1. Cereal cake, the main constituent material of which is cereal the chaff of which has been removed, the cereal material being heated and pressed to make a thin cake.

2. Cereal cake according to claim 1, wherein the cereal materials are irradiated by far infrared radiation before being heated and pressed.

3. Cereal cake according to claim 1 or 2, wherein an edible marine product known as Hijiki and/or small fishes are added to the cereal materials.

4. Cereal cake according to claim 1, 2 or 3, wherein the main constituent material of the cake is brown rice.

5. Cereal cake according to any preceding claim wherein the main constituent material of the cake is germinating cereal.

6. Cereal cake according to any preceding claim wherein the cereal material is mixed with soya beans.

7. Cereal cake according to any preceding claim wherein the cereal material is mixed with sesame seeds.

8. A device for manufacturing cereal cakes comprising processing apparatus (6) for cereals (A) having a hopper (9) for containing cereal, means (14) for dispensing a determined quantity of the cereal (A) from the hopper (9), heat-pressing means which heat-presses the dispensed cereal with upper and lower moulds (10,11) and displacing means (15) which pushes out cereal cakes (B) which have been made with the heat-pressing means, the device further comprising a cake receiving region (7) which receives cereal cakes (B) which have been processed, the device being installed on a moving base (3).

9. A device according to claim 8 wherein upper regions of operating spaces (4,5) defined by the device corresponding to an upper part of a body of a human being standing upright adjacent to the device and are at least partially surrounded by transparent plates (4a,4b,5a,5b,5c).

10. A device according to claim 8 or 9 wherein a wrapping space (34) is formed at or adjacent to the processing apparatus (6) or the cake receiving region (7).

11. A device according to claim 8, 9 or 10 wherein an air compressor (32) for driving one or more air cylinders (26,27) for driving the upper mould (10) and the lower mould (11) is positioned under the cake receiving region (7), a base (29) of the cake receiving region (7) being made of materials of high heat conductivity.
